# EUROPEAN PATENT APPLICATION

(11) **EP 1 174 018 A1**
(43) Date of publication of application: **23.01.2002**
(21) Application number: 01305046.3
(22) Date of filing: 11.06.2001
(51) Int. Cl.: A01D 34/84

(54) **Swivel head for line trimmer**

(30) Priority: 20.07.2000 US 619889
(71) Applicant: Ariens Company, Brillion, Wisconsin 54110 (US)
(72) Inventor: Csonka, Bola I. (2), Green Bay, Wisconsin 54313 (US); Damie, Joseph J., Menasha, Wisconsin 54952 (US); Peter, Timothy J., Appleton, Wisconsin 54915 (US); Prochnow, Perry L., Brillion, Wisconsin 54110 (US)
(74) Representative: Knott, Stephen Gilbert

(57) **Abstract**

A walk-behind line trimmer (10) includes a chassis (18) supported by wheels (22) rotatably mounted thereto. A handle assembly (14) is also mounted to the chassis. A swivel bracket (26) is supported by the chassis and pivotable with respect to the chassis. A housing (38) is mounted on the swivel bracket and carries an engine (42), a drive train (50,58,62,66), and a cutter head (70). The swivel bracket and housing are rotatable with respect to the chassis to move the cutter head to a selected operating position. Because the engine, drive train, and cutter head are all mounted to the housing, no adjustment of the drive train is necessary when pivoting the cutter head to a selected operating position. Because the handle assembly is mounted to the chassis, the cutter head may be pivoted without affecting the handle assembly.

## Description

The invention relates to walk-behind line trimmers.

Walk-behind line trimmers typically include a body or chassis supporting an internal combustion engine. The engine usually includes a vertical crankshaft that is coupled to a cutter shaft to cause the cutter shaft to rotate in response to rotation of the crankshaft. A disk is mounted to the cutter shaft and rotates therewith. Plastic monofilament line is attached to the disk and is whipped around as the disk rotates to trim grass and other vegetation.

The present invention provides a walk-behind trimmer including a chassis that is supported by a pair of wheels that are rotatable with respect to the chassis. A handle connects to the chassis to permit an operator to push and pull the trimmer along a portion of ground to be trimmed. A swivel bracket is pivotably mounted to the chassis. A housing is mounted to the swivel bracket and the swivel bracket and housing are pivotable together with respect to the chassis. The housing supports an internal combustion engine that includes an output shaft which is preferably the engine's crankshaft. The housing also supports a cutter head spaced from the output shaft.

Preferably a sheave is mounted to each of the output shaft and cutter head for rotation therewith. A belt extends between the sheaves to transfer torque from the output shaft to the cutter head, and to cause rotation of the cutter head in response to rotation of the output shaft.

Because both the cutter head and engine are mounted to the housing and supported by the swivel bracket, the position of the cutter head may be pivoted with respect to the chassis without changing the distance between the output shaft and the cutter head. The swivel bracket and housing are pivotable with respect to the chassis to permit a range of pivoting of the swivel bracket with respect to the chassis. Preferably, the cutter head may be pivoted up to about 14° to the left and right. Pivoting the swivel bracket and housing may position a portion of the cutting line outboard of the wheels of the trimmer.

A lock mechanism, which may be wing nut or knob, locks the swivel bracket in position and resists rotation of the swivel bracket with respect to the chassis. Because the handle assembly is mounted to the chassis, the trimmer is easily handled by an operator regardless of the position of the cutter head.

Other features and advantages of the invention will become apparent to those skilled in the art upon review of the following detailed description, claims, and drawings.

Fig. 1 is a perspective view of a walk-behind line trimmer embodying the present invention.

Fig. 2 is an exploded illustration of the rear portion of the trimmer of Fig. 1.

Fig. 3 is an exploded illustration of the front portion of the trimmer of Fig. 1.

Fig. 4 is a rear perspective view of the trimmer of Fig. 1.

Fig. 5 is a top view of the trimmer of Fig. 1 in a zero-swivel position.

Fig. 6 is a top view of the trimmer of Fig. 1 in a full-swivel position to the left.

Before one embodiment of the invention is explained in detail, it is to be understood that the invention is not limited in its application to the details of construction and the arrangements of the components set forth in the following description or illustrated in the drawings. The invention is capable of other embodiments and of being practiced or being carried out in various ways. Also, it is understood that the phraseology and terminology used herein is for the purpose of description and should not be regarded as limiting. The use of "including" and "comprising" and variations thereof herein is meant to encompass the items listed thereafter and equivalents thereof as well as additional items. The use of "consisting of" and variations thereof herein is meant to encompass only the items listed thereafter. The use of letters to identify elements of a method or process is simply for identification and is not meant to indicate that the elements should be performed in a particular order.

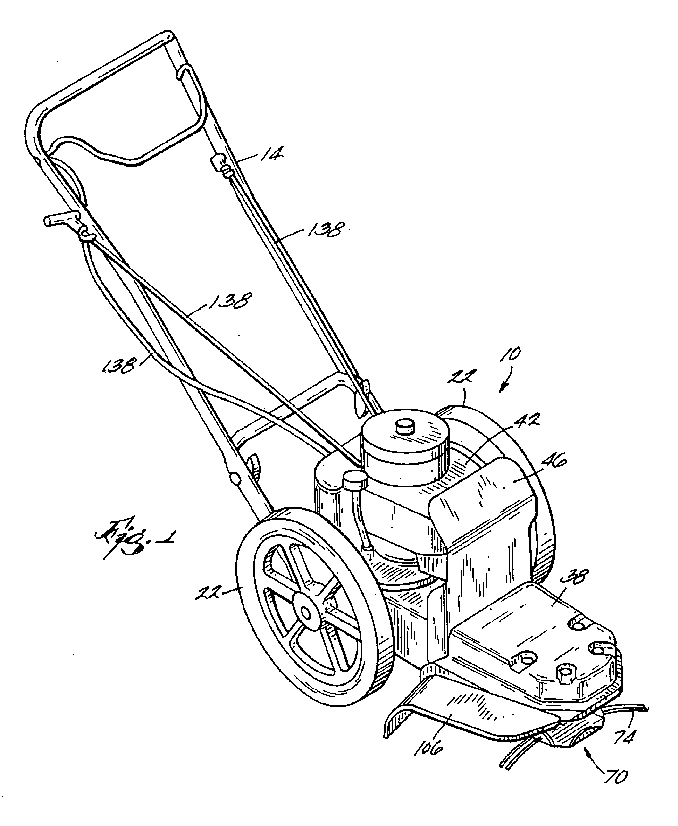

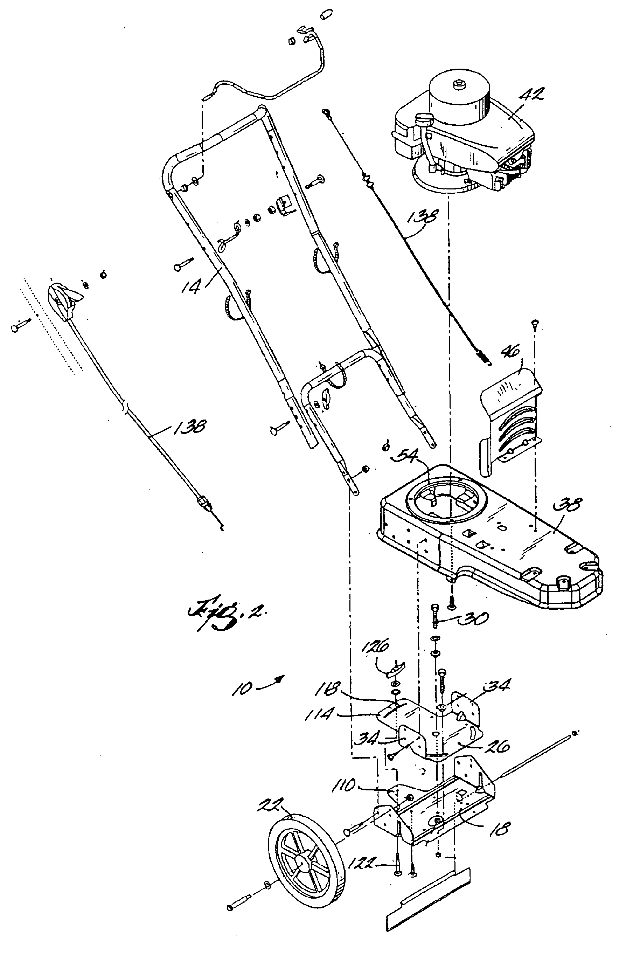

Fig. 1 illustrates a walk-behind line trimmer 10. The rear end components of the trimmer 10 are best seen in Fig. 2. The trimmer includes a handle assembly 14 that is bolted to a chassis or wheel bracket 18. A pair of wheels 22 (only one of which is shown in Fig. 2) are mounted to the chassis 18 with suitable axles to permit rotation of the wheels 22 with respect to the chassis 18. A swivel bracket 26 is supported by the chassis 18. A pivot bolt or pivot pin 30 extends through the swivel bracket 26 and chassis 18 and provides an axis of rotation for the swivel bracket 26 about which the swivel bracket 26 is rotatable with respect to the chassis 18. The swivel bracket 26 also includes a pair of flanges 34. A housing 38 fits over the swivel bracket 26, and the flanges 34 extend into the housing 38. Suitable fasteners extend through aligned holes in the housing 38 and the flanges 34 to couple the housing 38 and swivel bracket 26 together. An internal combustion engine 42 is mounted on top of the housing 38. The internal combustion engine 42 is preferably of the conventional vertical crankshaft type. A shield 46 is also mounted on top of the housing 38 to at least partially shield the engine 42 from brush and the like.

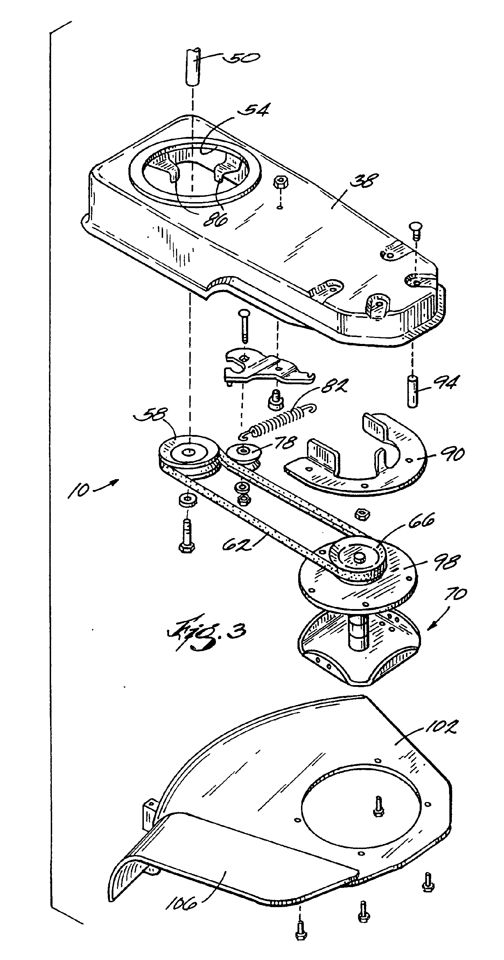

As seen in Fig. 3, an output shaft 50, which may be the engine's crankshaft, extends down through an aperture 54 in the top of the housing 38. Alternatively, the engine 42 may be a non-vertical crankshaft and/or may include a transmission such that an output shaft other than the crankshaft extends through the aperture in the top of the housing 38. As used herein, the term "output shaft" refers to the engine's crankshaft and any other shaft that is rotated by the engine 42 and extends into the housing 38. The drive train includes a first sheave 58 that is keyed or otherwise coupled to the output shaft 50. A drive belt 62 fits loosely around the first sheave 58, and also extends around a second sheave 66 that is keyed or otherwise coupled to a cutter head 70. The cutter head 70 carries cutting line 74 that is preferably monofilament line or another suitable plastic line.

A tensioner wheel 78 is biased away from the drive belt 62 with a spring 82, and engages the drive belt 62 when an actuator (such as a bail handle on the handle assembly 14) is actuated. When the tensioner wheel 78 engages the drive belt 62, the belt 62 is tightened with respect to the first and second sheaves 58, 66, and torque is transferred from the output shaft 50 to the cutter head 70. In this regard, the tensioner wheel 78 acts as a clutch.

The housing 38 includes depending fingers 86 in the aperture 54 that keep the belt 62 from falling off the first sheave 58, and a belt bracket 90 is mounted to the housing 38 to prevent the belt 62 from falling off the second sheave 66. Sleeves 94 (only one of which is illustrated) are used to maintain the proper spacing between the belt bracket 90 and the underside of the housing 38. A cover plate 98 of the cutter head 70 is provided and bolted to the belt bracket 90 to shield the second sheave 66 and drive belt 62 from debris. The cutter head 70 extends down through a trimmer shield 102 that contains debris under the trimmer 10 and forces the debris out a chute 106.

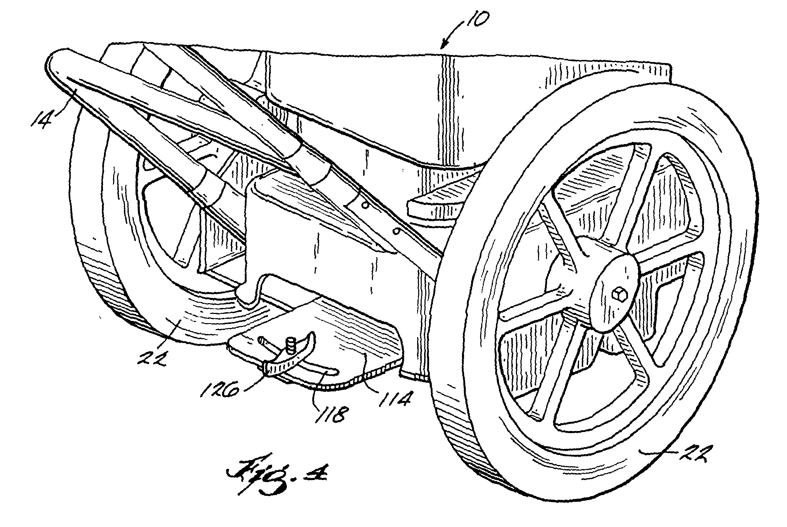

With reference to Figs. 2 and 4, each of the chassis 18 and swivel bracket 26 includes a tongue portion 110, 114, respectively, extending rearwardly. The swivel bracket tongue 114 includes an arcuate slot 118. A locking mechanism is used to lock the tongues 110, 114 together by friction. The locking mechanism includes a bolt 122 extending up through a hole in the chassis tongue 110 and through the slot 118 in the swivel bracket tongue 114, and a wing nut or rotatable clamp handle 126 that is threaded onto the bolt 122. The swivel bracket 26 may be locked into a selected angular position with respect to the chassis 18 by tightening the handle 126 on the bolt 122.

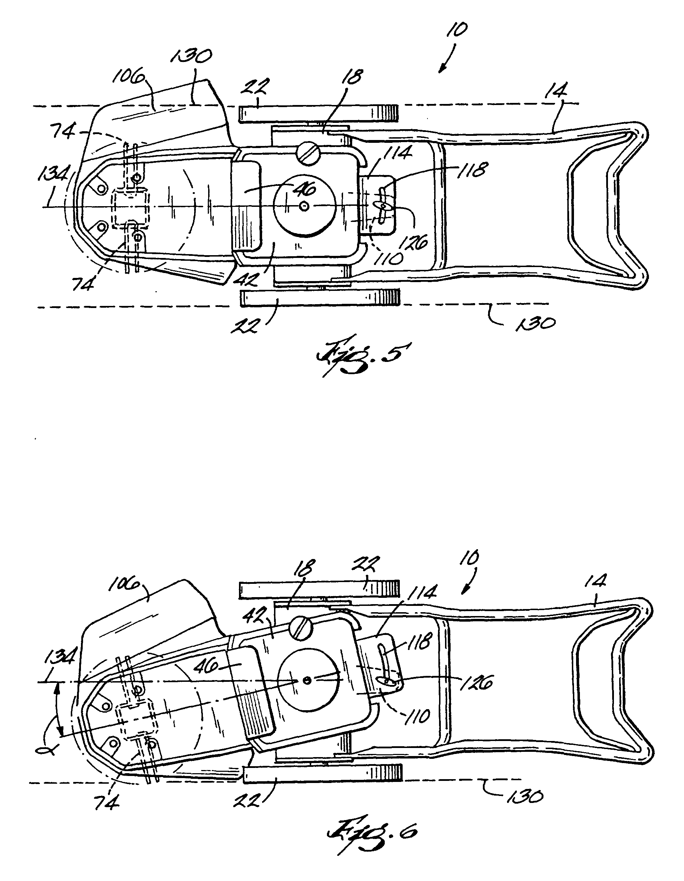

Fig. 5 illustrates the trimmer 10 in a zero-swivel position. The trimmer wheels 22 rotate in planes 130 substantially parallel to the longitudinal axis 134 of the trimmer 10 in the zero-swivel position. In the zero-swivel position, the cutter head 70 is positioned between the planes 130 substantially equidistant from each plane 130. Fig. 6 illustrates the trimmer 10 in a full-swivel position in which the swivel plate 26 and housing 38 have been pivoted about the pivot pin 30. Preferably, when in the full-swivel position, the head 70 is positioned so that the cutting line 74 extends outboard of the plane 130 of one of the wheels 22.

When in the full-swivel position, the trimmer 10 may be pushed or pulled next to structure (e.g., a fence or a wall) while the cutting lines 74 cut vegetation along the structure outboard of the wheel 22. The swivel bracket 26 is preferably able to pivot an angle α up to about 14° to either side of the zero-swivel position longitudinal axis 134. The degree to which the swivel bracket 26 is able to pivot is limited in part by the arc length of the slot 118 in the swivel bracket tongue portion 114. As mentioned above, the handle 14 assembly is mounted to the chassis 18, so that pivoting the swivel bracket 26 has substantially no effect on the handles 14.

Because the housing 38 carries both the engine 42 and the cutter head 70, the relative spacing between the output shaft 50 and the cutter head 70 is substantially fixed. Therefore, no adjustment of the drive train is necessary when pivoting the cutter head 70 to a selected operating position. Cables 138 interconnected between the handle assembly 14 and the pivotable housing 38 are provided with enough slack to accommodate the full range of pivoting of the housing 38.

## Claims

1. A walk-behind trimmer (10) **characterized in that** it comprises a chassis (18), a housing (38) pivotably mounted to said chassis, an internal combustion engine (42) mounted to said housing and pivotable therewith with respect to said chassis, an output shaft (50) supported by said housing, said output shaft being rotated by said engine, a cutter head (70) supported by said housing and coupled to said output shaft to cause rotation of said cutter head in response to rotation of said output shaft, and a cutting line (74) carried by said cutter head, said cutting line being whipped around in a circle by said cutter head in response to rotation of said cutter shaft.

2. The trimmer of claim 1, wherein the trimmer is **characterized by** a longitudinal axis (134), and wherein said housing (38) is able to rotate up to about 14° to both sides of said longitudinal axis.

3. The trimmer of claim 1, further comprising a locking mechanism (118,122,126) selectively locking and releasing said housing (38) with respect to said chassis (18).

4. The trimmer of claim 1, further comprising wheels (22) supporting said chassis (18) and rotatable to move said trimmer, said wheels rotating in substantially parallel planes (130), wherein said cutter head (70) carries a cutting line (74) and said cutter head is pivotable to at least partially position said cutting line on either side of at least one of said planes.

5. The trimmer of claim 1, further comprising a swivel bracket (26) supported by said chassis (18) and pivotable with respect to said chassis, said housing (38) being mounted to said swivel bracket and being pivotable therewith with respect to said chassis.

6. The trimmer of claim 5, wherein said chassis (18) includes a tongue portion (110) and said swivel bracket (26) includes a tongue portion (114), at least one of said tongue portions having formed therein an arcuate slot (118), said trimmer further comprising a bolt (122) extending through said arcuate slot and through both of said tongue portions and a handle (126) threaded onto said bolt and tightenable to resist rotation of said swivel bracket with respect to said chassis.

7. The trimmer of claim 1, further comprising a handle (14) coupled to the chassis (18) such that said housing (38) is pivotable with respect to said chassis and said handle.
